(19) Europäisches Patentamt
European Patent Office
Office européen des brevets

(11) **EP 2 884 385 A1**

(12) **EUROPEAN PATENT APPLICATION**

(43) Date of publication:
**17.06.2015 Bulletin 2015/25**

(21) Application number: **14197372.7**

(22) Date of filing: **11.12.2014**

(51) Int Cl.:
*G06F 3/16* (2006.01)  *H04N 5/232* (2006.01)
*G10L 25/78* (2013.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **13.12.2013  CN 201310687006**

(71) Applicant: **Huawei Technologies Co., Ltd.
Longgang District
Shenzhen, Guangdong 518129 (CN)**

(72) Inventor: **Liu, Yuanyuan
518129 Shenzhen (CN)**

(74) Representative: **Körber, Martin Hans
Mitscherlich PartmbB
Patent- und Rechtsanwälte
Sonnenstrasse 33
80331 München (DE)**

(54) **Method for performing voice control operation on terminal, and apparatus**

(57)    Embodiments of the present invention provide a method for performing a voice control operation on a terminal, and an apparatus, and relate to the field of audio technologies. The method includes: starting an application on the terminal and activating a microphone on the terminal; monitoring a signal status of the activated microphone; and outputting, when the signal status of the microphone transits, a control instruction to change a current operation status of the application. In the present invention, a change of environmental noise picked up by the microphone is used to perform an operation on the terminal application, thereby avoiding interference of the environmental noise in acquiring an audio signal, reducing a key pressing operation of a user, and enhancing user experience.

FIG. 1

EP 2 884 385 A1

**Description**

**TECHNICAL FIELD**

Embodiments of the present invention relate to the field of audio technologies, and in particular, to a method for performing a voice control operation on a terminal, and an apparatus.

**BACKGROUND**

Most existing terminals, for example, a mobile phone or a tablet computer, are equipped with a touchscreen. Almost all operations, for example, a shutter operation in photographing, and pressing of a shooting key during video capture, are completed on a screen. When a user performs an operation on an application function of a terminal, whether to take a photograph or to capture a video, at least one finger needs to be available to press an operation key after the user steadily holds the mobile phone with a bare hand. If the key is in a position inconvenient for operation by the available finger, a case in which an operation is difficult may occur; for example, it is difficult to accurately find a virtual key on the touchscreen when the user uses a rear-facing camera of the mobile phone to take a selfie. In the prior art, voice control is provided to resolve a problem that it is difficult to press a key; however, in a noisy environment, relatively strong interference may easily cause a decrease of a voice recognition rate in voice control, thereby leading to a failure of a control command for an operation.

**SUMMARY**

Embodiments of the present invention provide a method for performing a voice control operation on a terminal, and an apparatus, which use a change condition of environmental noise that is collected by a microphone to determine whether to output a control instruction to perform an operation on a terminal. Therefore, the operation on the terminal is efficient and convenient.

According to a first aspect, an embodiment of the present invention provides a method for performing a voice control operation on a terminal, and the method includes the following steps:

starting an application on the terminal and activating a microphone on the terminal;
monitoring a signal status of the activated microphone; and
outputting, when the signal status of the microphone transits, a control instruction to change a current operation status of the application.

With reference to the first aspect, in a first possible implementation manner of the first aspect, the monitoring a signal status of the activated microphone specifically includes:

collecting an audio signal by using the activated microphone and calculating a sketch value of the audio signal; and determining whether the sketch value of the audio signal is greater than or equal to a preset threshold; where when a determining result is the sketch value of the audio signal is greater than or equal to the preset threshold, the signal status of the microphone is a first state; when the determining result is the sketch value of the audio signal is not greater than or equal to the preset threshold, the signal status of the microphone is a second state; and accordingly, the outputting, when the signal status of the microphone transits, a control instruction to change a current operation status of the application specifically includes:

outputting, when the signal status of the microphone transits from the first state to the second state, or transits from the second state to the first state, the control instruction to change the current operation status of the application.

With reference to the first possible implementation manner of the first aspect, in a second possible implementation manner of the first aspect, the calculating a sketch value of the audio signal includes: calculating a signal energy value of the audio signal, or a signal amplitude value, or a fluctuation value of signal energy, or a fluctuation value of signal amplitude.

With reference to the first aspect, or the first possible implementation manner of the first aspect, or the second possible implementation manner of the first aspect, in a third possible implementation manner of the first aspect, there are multiple microphones:

accordingly, the starting an application on the terminal and activating a microphone on the terminal specifically includes:

starting the application on the terminal and activating at least two microphones of the multiple microphones on the terminal.

With reference to the third possible implementation manner of the first aspect, in a fourth possible implementation manner of the first aspect, the monitoring a signal status of the activated microphone specifically includes:

monitoring microphone signal statuses of the at least two activated microphones;
the outputting, when the signal status of the microphone transits, a control instruction to change a current operation status of the application specifically includes:

outputting, when at least two signal statuses in the microphone signal statuses of the at least two activated microphones transit, the control instruction to change the current operation status of the application.
With reference to the fourth possible implementation manner of the first aspect, in a fifth possible implementation manner of the first aspect, the outputting, when at least two signal statuses in the microphone signal statuses of the at least two activated microphones transit, the control instruction to change the current operation status of the application specifically includes:

outputting, when the at least two signal statuses in the microphone signal statuses of the at least two activated microphones transit within a preset time interval, the control instruction to change the current operation status of the application.
With reference to the first aspect or any one of the first possible implementation manner of the first aspect to the fifth possible implementation manner of the first aspect, in a sixth possible implementation manner of the first aspect, the outputting, when the signal status of the microphone transits, a control instruction to change a current operation status of the application specifically includes:

performing timing when the signal status of the microphone transits, and outputting, when a preset time period t expires, the control instruction to change the current operation status of the application.
With reference to the first aspect or any one of the first possible implementation manner of the first aspect to the sixth possible implementation manner of the first aspect, in a seventh possible implementation manner of the first aspect, the method further includes:

when the signal status of the microphone transits, sending prompt information to prompt that the control instruction is to be output after the time period t expires, where the prompt information is a voice prompt, a vibration prompt, a text prompt, or a light prompt.
With reference to the first aspect or any one of the first possible implementation manner of the first aspect to the seventh possible implementation manner of the first aspect, in an eighth possible implementation manner of the first aspect, the starting an application on the terminal and activating a microphone on the terminal specifically includes: starting the application on the terminal, and activating the microphone on the terminal after the preset time period.
According to a second aspect, an embodiment of the present invention provides a terminal, including a microphone and further including the following apparatuses:

a starting unit, configured to start an application on the terminal and configured to activate a microphone on the terminal;
a monitoring unit, configured to monitor a signal status of the activated microphone; and
an operating unit, configured to output, when the signal status of the microphone transits, a control instruction to change a current operation status of the application.

With reference to the second aspect, in a first possible implementation manner of the second aspect, the monitoring unit includes:

a collecting subunit, configured to collect an audio signal by using the activated microphone;
a calculating subunit, configured to calculate a sketch value of the collected audio signal; and
a determining subunit, configured to determine whether the sketch value of the audio signal is greater than or equal to a preset threshold; when a determining result is the sketch value of the audio signal is greater than or equal to the preset threshold, the signal status of the microphone is a first state; when the determining result is the sketch value of the audio signal is not greater than or equal to the preset threshold, the signal status of the microphone is a second state; and

accordingly, the operating unit is configured to output, when the signal status of the microphone transits from the first state to the second state, the control instruction to change the current operation status of the application; or configured to output, when the signal status of the microphone transits from the second state to the first state, the control instruction to change the current operation status of the application.

With reference to the first possible implementation manner of the second aspect, in a second possible implementation manner of the second aspect, the calculating subunit includes:

an energy calculating subunit, configured to calculate a signal energy value of the audio signal; or
an amplitude calculating subunit, configured to calculate a signal amplitude value of the audio signal; or
an energy fluctuation calculating subunit, configured to calculate a fluctuation value of signal energy of the audio signal; or
an amplitude fluctuation calculating subunit, configured to calculate a fluctuation value of signal amplitude of the audio signal.

With reference to the second aspect, or the first possible implementation manner of the second aspect, or the second possible implementation manner of the second aspect, in a third possible implementation manner of the second aspect, there are multiple microphones:

accordingly, the starting unit includes:

an activating subunit, configured to activate at least two microphones of the multiple microphones on the terminal.

With reference to the third possible implementation manner of the second aspect, in a fourth possible implementation manner of the second aspect, the monitoring unit is configured to monitor microphone signal statuses of the at least two activated microphones; and
accordingly, the operating unit is specifically configured to output, when at least two signal statuses in the microphone signal statuses of the at least two activated microphones transit, the control instruction to change the current operation status of the application.
With reference to the fourth possible implementation manner of the second aspect, in a fifth possible implementation manner of the second aspect, the operating unit is further configured to output, when the at least two signal statuses in the microphone signal statuses of the at least two activated microphones transit within a preset time interval, the control instruction to change the current operation status of the application.
With reference to the second aspect or any one of the first possible implementation manner of the second aspect to the fifth possible implementation manner of the second aspect, in a sixth possible implementation manner of the second aspect, the operating unit is further configured to perform timing when the signal status of the microphone transits, and output, when a preset time period t expires, the control instruction to change the current operation status of the application.
With reference to the second aspect or any one of the first possible implementation manner of the second aspect to the sixth possible implementation manner of the second aspect, in a seventh possible implementation manner of the second aspect, the apparatus further includes:

a prompting unit, configured to, when the signal status of the microphone transits, send prompt information to prompt that the control instruction is to be output after the time period t expires, where the prompt information is a voice prompt, a vibration prompt, a text prompt, or a light prompt.

With reference to the second aspect or any one of the first possible implementation manner of the second aspect to the seventh possible implementation manner of the second aspect, in an eighth possible implementation manner of the second aspect, the activating subunit:

is further configured to activate, after the starting unit starts the application on the terminal, the microphone on the terminal after the preset time period.

In embodiments of the present invention, a change of environmental noise picked up by a microphone is used to perform an operation on a terminal application, thereby avoiding interference of the environmental noise in acquiring an audio signal, and reducing a trouble brought by a key pressing operation of a user. In addition, when there are multiple microphones on a terminal, output of an instruction is determined by a signal status transition of at least two microphones, which is helpful to an accurate operation and avoids a trigger operation caused by a one-hand misoperation during an operation process of the user.

**BRIEF DESCRIPTION OF DRAWINGS**

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 is a block diagram of a terminal on which the present invention is implemented;
FIG. 2 is a block diagram of a system architecture of the terminal 100 in FIG. 1;
FIG. 3 is a flowchart of a method for performing a voice control operation on a terminal according to an embodiment of the present invention;
FIG. 4 is a block diagram of an apparatus for performing a voice control operation on a terminal according to an embodiment of the present invention;
FIG. 5 is a block diagram of a monitoring unit of the apparatus for performing a voice control operation on a terminal according to the embodiment of the present invention in FIG. 4;
FIG. 6 is a block diagram of a calculating subunit of the apparatus for performing a voice control operation on a terminal according to the embodiment of the present invention in FIG. 4; and
FIG. 7 is a block diagram of another apparatus for performing a voice control operation on a terminal according to an embodiment of the present invention.

**DESCRIPTION OF EMBODIMENTS**

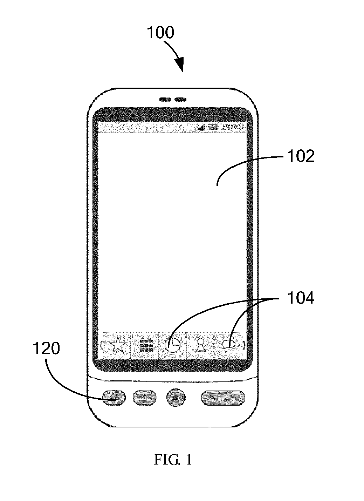

The following clearly describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.
Referring to FIG. 1, which is a block diagram of a terminal 100 on which the present invention is implemented. The terminal 100 may be a data processing device such as a tablet computer, a personal digital assistant, a cellular phone, a network appliance, a camera, a smartphone, an enhanced General Packet Radio Service (EGPRS) mobile phone, a network base station, a media player, a navigation device, an email device, a game control center, an electronic photo frame, or a data card, or a combination of any two or more of the data processing devices or other data processing devices.
The terminal 100 includes a touch-sensitive display 102. The touch-sensitive display 102 may be a liquid crystal display (LCD), a light emitting diode (LED), a carbon nanotube display or some other displays. The touch-sensitive display 102 may be a device that is sensitive to touch and/or tactile touch of a user and integrates display and touch response. The touch-sensitive display 102 may include a multi-point touch-sensitive response function, where the multi-point touch-sensitive response means that the touch-sensitive display 102 can process multiple concurrent touch points, including processing of data related to pressure, an area and/or a location of each touch point. Such a multi-point touch function makes it convenient to use gestures or movements of multiple fingers to interact with the terminal 100. The terminal 100 may display one or more graphical user interfaces on the touch-sensitive display 102, so as to provide a user with access to various system objects and convey information to the user. The graphical user interface may include one or more optional objects, that is, display objects. The display object provides, in a graphic manner, the user with a portal for enabling a function. The optional object includes a device function, an application, a window, a file, an alarm, an event or other identifiable system objects.
The terminal 100 may implement functions of multiple devices, such as a phone device, an email device, a network data communications device, a Wi-Fi base station device, and a media processing device. In some implementation manners, a specific display object may be displayed on a menu bar of a user interface. In some implementation manners, the device functions are accessible from a top-layer graphical user interface. For example, a function corresponding to the device may be invoked by a touch.
In some scenarios, after a device function of the terminal 100 is invoked, the graphical user interface of the terminal 100 changes, or is enlarged or replaced with another user interface or user interface element to assist the user in accessing and operating a specific function associated with the corresponding device function. For example, in response to the user's touch on a phone object, a graphical user interface of the touch-sensitive display 102 may present display objects related to various phone functions. Similarly, touching an email object may cause the graphical user interface to present display objects related to various email functions; touching a web object may cause the graphical user interface to present display objects related to a web page browsing function; and touching a media player object may cause the graphical user interface to present display objects related to various media processing functions.

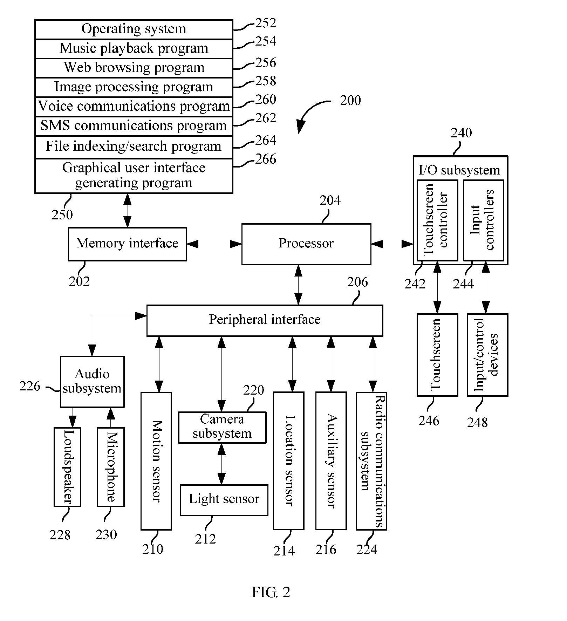

In some other scenarios, an environment or state of the top-layer graphical user interface in FIG. 1 may be restored by pressing a button 120 that is near the bottom of the terminal 100 or a virtual Home key. In some other scenarios, each corresponding device function may have a corresponding "main interface" display object displayed on the touch-sensitive display 102, and a graphical user interface environment in FIG. 1 may be restored by pressing the "main interface" display object. In some other scenarios, the top-layer graphical user interface of the terminal 100 may include another display object 106, such as a short message service (SMS) object, a calendar object, a photo object, a camera object, a calculator object, a stock object, a weather object, a map object, a notepad object, a clock object, an address book object, or a setting object. Touching a map object, for example, may invoke a map plotting function and a location-based service environment and a support function. Similarly, selecting any display object 106 may invoke a corresponding object environment and function. Referring to FIG. 2, which is a system architecture 200 of the terminal 100 in FIG. 1, the system architecture 200 of the terminal 100 may include a memory interface 202, one or more processors 204 and a peripheral interface 206, the processors 204 including data processors, image processors and/or central processing units. The memory interface 202, the one or more processors 204 and/or the peripheral interface 206 may be stand-alone components or integrated into one or more integrated circuits. Components in the system architecture 200 may be connected by using one or more communications buses or signal cables. A sensor, a device and a subsystem may be connected to the peripheral interface 206 to assist in implementing various functions of the terminal. For example, a motion sensor 210, a light sensor 212, and a location sensor 214 may be connected to the peripheral interface 206 to assist in implementing functions such as a motion sensing function, an ambient luminance sensing function, and a location sensing function of the terminal, and may implement specific functions by coordinating with each other. Other auxiliary sensors 216, such as a positioning system (for example, a GPS receiver), a temperature sensor, a biometric sensor, a barometric sensor, and an altitude sensor, may also be connected to the peripheral interface 206 to assist in implementing various relevant functions of the terminal. The system architecture 200 of the terminal 100 further includes a camera subsystem 220. The camera subsystem 220 uses the light sensor 212, such as a charge-coupled device CCD or a complementary metal-oxide-semiconductor CMOS light sensor, to assist the camera subsystem in implementing a corresponding image acquiring function. The system architecture 200 of the terminal 100 further includes a radio communications subsystem 224. The radio communications subsystem 224 provides the terminal with a radio communications function. The radio communications subsystem 224 may include a radio frequency receiver and transmitter, and/or an optical (such as infrared) receiver and transmitter. The system architecture 200 of the terminal 100 further includes an audio subsystem 226. The audio subsystem 226 is used to implement a sound pickup function or an audio signal playback function of the terminal. The audio subsystem 226 includes a loudspeaker 228 and a microphone 230 to assist in implementing the foregoing sound pickup function and the audio signal playback function. Specifically, the microphone 230 is an energy converter that converts a sound signal into an electrical signal. That is, when sound vibration reaches a diaphragm of the microphone, it causes a magnet in the microphone to produce a changing current, and the changing current is transferred to a rear sound processing circuit for amplification processing; therefore, the microphone converts a changing pressure wave in air into a changing electrical signal. The system architecture of the terminal 100 further includes an I/O subsystem 240. The I/O subsystem 240 enables the terminal 100 to implement input/output control. The I/O subsystem 240 may include a touchscreen controller 242 and/or other (one or more) input controllers 244. The touchscreen controller 242 may be connected to a touchscreen 246. The touchscreen 246 and the touchscreen controller 242 may use any one of multiple touch-sensitive technologies to detect a touch and movement or interruption of the touch, where the touch-sensitive technologies include but are not limited to capacitive, resistive, infrared and surface acoustic wave technologies, and other proximity sensor arrays or other components that use the touchscreen 246 to implement determining of one or more touch points. The input controller 244 may be connected to other input/control devices 248. The other input/control devices 248 may be one or more buttons, rocker switches, thumb rotary switches, infrared ports, USB ports and/or tap-and-select devices such as a stylus. In addition, the touchscreen 246 may also be used to present a virtual button and/or a keyboard to implement input control on the terminal. The memory interface 202 of the system architecture 200 of the terminal 100 may be connected to a memory 250. The memory 250 may be a high-speed random access memory and/or a non-volatile memory, such as one or more disk storage devices, one or more optical storage devices and/or a flash memory. The memory may store an operating system 252, where the operating system 252 may include instructions that are used to process a basic system service and perform a hardware-dependent task. The memory 250 may further store multiple executable programs, where the executable programs may be a music playback program 254, a web browsing program 256, an image processing program 258, a voice communications program 260, an SMS communications program 262, a file indexing/search program 264, a graphical user interface generating program 266, or other applications that have various functions.

The foregoing introduces an exemplary terminal 100 and a system architecture 200 of the terminal. A method for performing a voice control operation on a terminal according to the present invention is applied to the terminal. The following introduces specific embodiments of the present invention based on the foregoing exemplary terminal 100.

**Embodiment 1:**

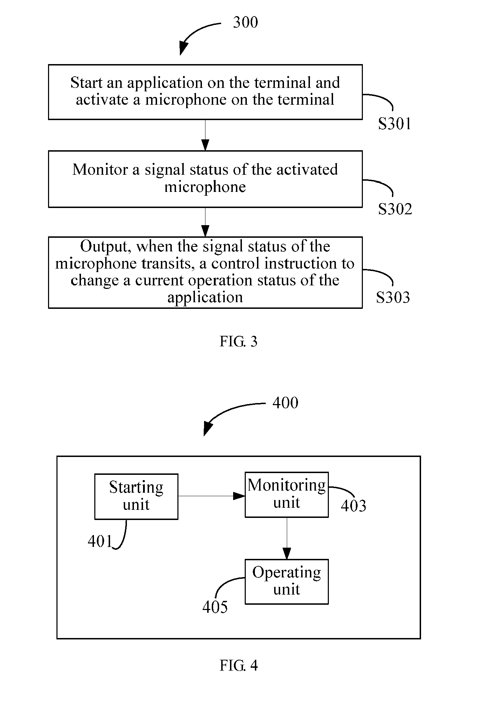

As shown in FIG. 3, an embodiment of the present invention provides a method for performing a voice control operation on a terminal, and the method includes the following steps:

S301. Start an application on the terminal and activate a microphone on the terminal.

A user triggers the application on the terminal by pressing a key, touching or other means, so that the started application enters a preparation phase. The application herein may be a photographing program, a recording program, or a camera program on the terminal, and may also be an alarm clock program, and may further be all other programs that may be operated by a trigger control instruction. That is, once the application is started, the application enters its preparation or ready mode, and waits for a subsequent trigger control instruction to perform an operation on the application to change a current operation status. In a specific application scenario, for example, for the above-mentioned terminal 100, the user may trigger the application on the terminal 100 by using the touchscreen 246 on the system architecture 200 of the terminal 100 or the other input/control devices 248. The application may be the camera subsystem 220 that is connected to the peripheral interface 206 on the system architecture 200 of the terminal 100, the audio subsystem 226, or the like.

To facilitate the user's operation, in the present invention, a change amplitude, a change condition, and the like, of a signal picked up by monitoring the microphone are used as a basis for whether to trigger the application that is started and enters the preparation phase to change the current operation status. Specifically, at least one microphone on the terminal is activated, so that the microphone enters a signal collection mode, that is, an audio signal in an environment is collected, where the audio signal in the environment may be any audio signal from the environment.

S302. Monitor a signal status of the activated microphone.

When the started application on the terminal enters a voice control operation mode, the microphone on the terminal is activated and enters the signal collection mode. The microphone in this mode is used as a environment sound monitoring device to monitor an environmental sound. That is, a sound is collected from the environment, and a sound condition of a surrounding environment of the terminal is picked up. If the surrounding environment is relatively noisy, an environmental sound monitoring result at a relatively high level is output, for example, a higher voltage or current level, or a digital signal that represents a current sound environment is output. If the surrounding environment is relatively quiet, a sound monitoring result at a relatively low level is output, for example, a lower voltage or current level, or a digital signal that represents a current sound environment is output. Alternatively, in an absolutely quiet environment, no signal is output or only a digital noise signal is output to represent a current sound condition of the environment where the microphone is. Whether the microphone outputs the signal or not, or an amplitude of the signal output by the microphone, is referred to as the signal status of the microphone. Optionally, the signal status of the microphone may be directly stored in a register or a memory, or may be stored in the register or the memory after being processed in such a way as smoothing, noise reduction, and value averaging.

S303. Output, when the signal status of the microphone transits, a control instruction to change a current operation status of the application.

After the signal status of the microphone is acquired, the terminal monitors the signal status of the microphone in real time, and activates a next execution action of the started application according to a monitoring result. Optionally, the signal status of the microphone obtained in step S202 is an original state, and the original state is monitored in real time. In an actual application scenario, the signal of the microphone varies with a user operation and an environment. Here, we use the signal status of the microphone recorded in S102 as a basis, and monitor whether the audio signal collected by the microphone changes on that basis. The change is processed to obtain a new state of the microphone. Because environmental noise is uncontrollable, a volume of the audio signal collected by the microphone in a changing environment is also uncontrollable. Therefore, the audio signal needs to be processed to read the signal status of the microphone in real time. The processing herein may be implemented by using many methods, and a processing result is that noise of a complicated environment may be identifiable and readable to a system. For example, a threshold is preset and the audio signal of the complicated environment is simply classified, so that the change after classification may be identified and read by the system. As an optional implementation manner, the signal status of the microphone may be classified on the basis of the preset threshold in the original state. If it is found out by monitoring that the signal status of the microphone crosses the preset threshold on the basis of the original state, it is read as one state transition. Optionally, the preset threshold herein may be self-adjusted according to a condition of the environmental noise. If the environment is relatively quiet, the threshold may be set to a relatively small value; if the environment is relatively noisy, the threshold may be set to a relatively large value. In this way, a better reading capability of monitoring the microphone is achieved in different environmental conditions. This reading capability enables the terminal to accurately read the change of the signal status of the microphone. After the terminal reads the change of the signal status of the microphone, a trigger control instruction is output to perform an application operation on the started application to change the current operation status, thereby implementing the operation on an application function of the terminal by using the microphone on the terminal.

In a method for performing a voice control operation on a terminal provided by this embodiment of the present invention, an application on the terminal is started and a microphone on the terminal is activated, and whether a control instruction is output to perform an operation on the application is determined by using an audio signal collected by the microphone and monitoring a status of the signal. In this embodiment of the present invention, a change of environmental noise picked up by the microphone is used to perform the operation on a terminal application, thereby avoiding interference of the environmental noise in acquiring an audio signal, and reducing a trouble brought by a key pressing operation of a user.

Specifically, as described in step S301, the application on the terminal is started and the microphone on the terminal is activated, where activation of the microphone may be that the activation of the microphone is triggered at the same time when the application on the terminal is started, so that the terminal enters the voice control operation mode; the activation of the microphone may also be triggered after the application on the terminal is started for a period of time; and the activation of the microphone may further be manually triggered by a user. Therefore, the terminal enters the voice control operation mode; optionally, the microphone may enter the voice control operation mode in a preset time period after the application is started, which gives the user enough time to make preparations before operation, and enables the user to conveniently and flexibly operate the terminal. Specifically, at least one microphone on the terminal is activated, so that the microphone enters a signal collection mode, that is, an audio signal in an environment is collected, where the audio signal in the environment may be any audio signal from the environment.

As described in step S302, the monitoring a signal status of the activated microphone specifically includes:

collecting an audio signal by using the activated microphone and calculating an energy value of the audio signal; determining whether the energy value is greater than or equal to a preset threshold; where when a determining result is the energy value of the audio signal is greater than or equal to the preset threshold, the signal status of the microphone is a first state; when the determining result is the energy value of the audio signal is not greater than or equal to the preset threshold, the signal status of the microphone is a second state.

As described in step S303, the outputting, when the signal status of the microphone transits, a control instruction to change a current operation status of the application specifically includes:

outputting, when the signal status of the microphone transits from the first state to the second state, or transits from the second state to the first state, the control instruction to change the current operation status of the application.

When the started application on the terminal enters a voice control operation mode, the microphone on the terminal is activated and enters the signal collection mode, and the terminal enters the voice control operation mode. The microphone in this mode is used as a sound environment monitoring device to monitor an environmental sound. That is, a sound is collected from the environment, and a sound condition of a surrounding environment of the terminal is picked up. If the surrounding environment is relatively noisy, an environmental sound monitoring result at a relatively high level is output, for example, a higher voltage or current level, or a digital signal that represents a current sound environment is output. If the surrounding environment is relatively quiet, a sound monitoring result at a relatively low level is output, for example, a lower voltage or current level, or a digital signal that represents a current sound environment is output. Alternatively, in an absolutely quiet environment, no signal is output or only a digital noise signal is output to represent a current sound condition of the environment where the microphone is. Whether the microphone outputs the signal or not, or an amplitude of the signal output by the microphone, is referred to as the signal status of the microphone. As an optional implementation manner, in this embodiment of the present invention, a complicated and changeable signal status of the microphone is simply classified according to a preset threshold, so that the classified signal status may be identifiable and readable to a system. Optionally, the preset threshold may be adjusted according to a situation of environmental noise; after the signal status of the microphone is acquired by the terminal, the terminal monitors the signal status of the microphone in real time, and activates a next execution action of the started application according to a monitoring result. Optionally, an original signal status of the microphone is used as an example. The signal status is the first state if the energy value is greater than or equal to the foregoing preset threshold, and the signal status is the second state if the energy value is less than the foregoing preset threshold. Specifically, on the one hand, such a state classification is to enable the signal status of the microphone, which is output according to noise of the complicated environment, to be identified and read by the system, and on the other hand, the state classification is to directly present a noise level of the environment where the microphone is. For example, if the signal status of the microphone is in the first state, it is assumed that a current noise level is relatively high; if the signal status of the microphone is in the second state, it is assumed that a current noise level is relatively low. Optionally, the acquired original signal status of the microphone may be directly stored in a register or a memory, or may be stored in the register or the memory after being processed in such a way as smoothing, noise reduction, and value averaging. After the signal status of the microphone is acquired, the signal status of the microphone is monitored in real time. Once it is found out that a change of the signal status of the microphone crosses the preset threshold, that is, the signal status of the microphone transits from the first state of a higher noise level to the second state of a lower noise level, or transits from the second state of a lower noise level to the first state of a higher noise level; specifically, if the signal status of the microphone is higher than the preset threshold before transition, and the signal status of the microphone is lower than the preset threshold after the transition, or the signal status of the microphone is lower than the preset threshold before the transition, and the signal status of the microphone is higher than the preset threshold after the transition, the terminal outputs a trigger control instruction to perform an application operation on the started application to change the current operation status once the foregoing state transition is monitored by the terminal, thereby implementing the operation on an application function of the terminal by using the microphone on the terminal. In an actual application scenario, the state transition may be implemented according to user's control over the microphone on the terminal. For example, when the original signal status of the microphone read by the terminal is the second state of a lower noise level, it may be due to that the user blocks the microphone, so that a sound pickup channel is in a closed state; or when the original signal status of the microphone read by the terminal is the first state of a higher noise level, it may be due to that the user does not block the microphone, so that the sound pickup channel is in an open state. Optionally, in the actual application scenario, the signal status transition of the microphone may be caused by multiple reasons, for example, a closed sound pickup channel is now open, so that the signal status of the microphone transits from the second state to the first state; or an open sound pickup channel is now closed, so that the signal status of the microphone transits from the first state to the second state; or the environmental noise suddenly and drastically changes, and the change may be a sudden drop or rise, so that the signal status of the microphone transits.

Further, optionally, during a specific implementation process, the calculating a sketch value of the audio signal collected by the microphone is specifically: what is calculated is a signal energy value, or what is calculated is a signal amplitude value, or what is calculated is a fluctuation value of signal energy, or what is calculated is a fluctuation value of signal amplitude; the audio signal obtained by means of calculation is used to reflect the signal status of the microphone.

In a method for performing a voice control operation on a terminal provided by this embodiment of the present invention, whether a control instruction is output to perform an operation on the application is determined by using an audio signal collected by the microphone and monitoring a status of the signal. In this embodiment of the present invention, a change of environmental noise picked up by the microphone is used to perform the operation on a terminal application, thereby avoiding interference of the environmental noise in acquiring an audio signal, and reducing a trouble brought by a key pressing operation of a user.

Based on any one of the foregoing embodiments of the present invention, this embodiment of the present invention provides still another method for performing a voice control operation on a terminal.

Based on any one of the foregoing embodiments of the present invention, further, in this embodiment of the present invention, there are multiple microphones.

Accordingly, the starting an application on the terminal and activating a microphone on the terminal specifically includes:

starting the application on the terminal and activating at least two microphones of the multiple microphones on the terminal.

In this case, the multiple microphones form a microphone array. When the multiple microphones are activated, what is monitored is a signal status of the microphone array consisting of the multiple activated microphones. When a signal status of at least one microphone transits, the control instruction is output to perform the operation on the application. Optionally, it may also be that when signal statuses of at least two microphones transit, the control instruction is output to perform the operation on the application.

In this embodiment of the present invention, when the multiple microphones form the microphone array on the terminal, the signal status of the microphone array is monitored. When the signal statuses of the at least two microphones transit, the control instruction is output. Compared with that output of an instruction is determined by a signal status transition of only one microphone, in this embodiment of the present invention, output of an instruction is determined by a signal status transition of at least two microphones, which is helpful for accuracy of the operation and avoids a trigger operation caused by a one-hand misoperation during an operation process of a user.

Further, optionally, in this embodiment of the present invention, in a case in which original signal statuses of the at least two microphones transit, optionally, the at least two microphones may transit at the same time, and may also transit at a preset interval. The preset interval is obtained according to an empirical value in practice, and an objective of setting the time interval is to provide a device with an error tolerance capability. Because the microphone of the device is generally disposed on different positions of the terminal, if a position of a sound source is relatively close to a microphone and is relatively far from other microphones, transition time of the signal status of the microphone is different. The interval is short. However, if the time interval is not set, in a case in which the terminal is relatively sensitive, a case that the device cannot correctly perform the control instruction may occur. Therefore, the time interval is set, and signal status transitions of the microphone sequentially occurred within the time interval are regarded as a simultaneous/same transition, which can improve the error tolerance capability of the device and facilitate use.

Based on technical effects brought by the foregoing embodiment, the signal statuses of the multiple microphones may transit at the same time and may also transit at the preset interval to trigger output of the control instruction, which helps bring convenience and diversity to a user during the operation process, and further enhances user experience.

Further, optionally, in this embodiment of the present invention, when it is monitored that the signal status of the microphone transits, prompt information is sent to prompt that the control instruction is to be output after t seconds. The prompt information may be a voice prompt, vibration prompt, text prompt, or a light prompt, or any other manners that can be used to prompt the user, where t is the empirical value.

Based on technical effects brought by the foregoing embodiment, an addition of the prompt information enables the user to clearly know sending time of the operation of the terminal, thereby avoiding a trigger of a control instruction caused by a misoperation of the user. Therefore, the user performs a more convenient and flexible operation on the terminal, and user experience is further enhanced.

Based on any one of the foregoing embodiments, as an optional implementation manner, the technical solution may further include the following method:

As described in step S302, in the method of the monitoring a signal status of the activated microphone, the method includes collecting an audio signal by using the activated microphone and calculating a sketch value of the audio signal. The sketch value of the audio signal may be specifically: what is calculated is a signal energy value, or what is calculated is a signal amplitude value, or what is calculated is a fluctuation value of signal energy, or what is calculated is a fluctuation value of signal amplitude; optionally, in this embodiment of the present invention, the calculated sketch value of the audio signal is the signal energy value.

In this embodiment of the present invention, a photographing application on the terminal is still selected as an example for specific illustration. In other words, the user starts a photographing function of the terminal, and the start action triggers the microphone of the terminal to enter the signal collection mode, so that the terminal collects the audio signal and calculates the signal energy value of the audio signal, thereby determining the signal status of the microphone and recording the signal status of the microphone. In this case, a camera of the terminal is in a photographing preparation state and waits for the system to send a control instruction of pressing a shutter to perform a photographing operation.

After the audio signal is collected by the activated microphone, in this embodiment of the present invention, the signal energy value $E_i(n)$ of the audio signal collected by the microphone is calculated, which is specifically performed by using the following formula:

$$E_i(n) = 10 * \log_{10} \sum_{k=1}^{k=K} x_k^2$$

Where, n represents a serial number of the microphone, and i represents an analysis frame number used by the system for signal analysis. A length of the analysis frame may be set according to experience, that is, the signal energy value $E_i(n)$ is obtained by performing one calculation at an interval according to the experience. Where, k represents a serial number of a signal sampling point collected in the analysis frame ($1 \leq k \leq K$), a value of K herein may be 320, and $X_k$ represents an amplitude value of a $k^{th}$ sampling point.

The calculated signal energy value $E_i(n)$ is compared with the preset threshold $T1$. When $E_i(n) \geqq T1$, it is determined that the microphone is in the first state; when $E_i(n) < T1$, it is determined that the microphone is in the second state. An original signal status of the microphone obtained by the determining is recorded and stored.

Accordingly, as described in step S303, the outputting, when the signal status of the microphone transits, a control instruction to change a current operation status of the application is specifically as follows:

The recorded signal status of the microphone is monitored; optionally, there may be one microphone and may also be multiple microphones. When there are multiple microphones, at least two microphones of the multiple microphones are activated. The at least two microphones form a microphone array, and the signal statuses of the at least two microphones are monitored. When the signal status of at least one or at least two microphones transit, the control instruction is output to perform a shutter operation on the photographing application. During a specific implementation process, the preset threshold $T1$ is used as a threshold to determine whether the transition occurs. Once a change of the signal energy value crosses the preset threshold $T1$, it is regarded as an occurrence of one transition. Specifically, during a process of monitoring the signal status of the microphone, the signal energy value collected by the microphone may change; if the change is within the preset threshold, that is, the signal energy value that is greater than or equal to the preset threshold is still greater than or equal to the preset threshold after the change, or the signal energy value that is less than the preset threshold is still less than the preset threshold after the change, the state does not transit; however, when the signal energy value that is originally higher than the preset threshold is lower than the preset threshold after the transition, or the signal energy value that is originally lower than the preset threshold is higher than the preset threshold after the transition, it is regarded that a state transition occurs. When a system detects by monitoring that the state transits, a control instruction that triggers the shutter is output to perform a photographing operation on the photographing application, thereby implementing the operation on a photographing function on the terminal by using the microphone.

In this embodiment of the present invention, a change of a signal energy value of an audio signal of environmental noise picked up by a microphone is used to trigger an operation on an application, which avoids interference of the environmental noise and meanwhile also makes full use of the environmental noise to perform the operation on a terminal application, thereby reducing a trouble brought by a key pressing operation of a user and enabling more convenient and flexible operations on a terminal.

Based on any one of the foregoing embodiments, as another optional implementation manner, the technical solution may further include the following method:

As described in step S302, in the method of the monitoring a signal status of the activated microphone, the method includes collecting an audio signal by using the activated microphone and calculating a sketch value of the audio signal. The sketch value of the audio signal may be specifically: what is calculated is a signal energy value, or what is calculated is a signal amplitude value, or what is calculated is a fluctuation value of signal energy, or what is calculated is a fluctuation value of signal amplitude; optionally, in this embodiment of the present invention, the calculated sketch value of the audio signal is the fluctuation value of the signal energy.

Same as the foregoing implementation manner, in this implementation manner, a photographing application on the terminal is still selected as an example for specific illustration. In other words, the user starts a photographing function of the terminal, and the start action triggers the microphone of the terminal to enter the signal collection mode, so that the terminal collects the audio signal and calculates the signal energy value of the audio signal, thereby determining the signal status of the microphone and recording the signal status of the microphone. In this case, a camera of the terminal is in a photographing preparation state and waits for the system to send a control instruction of pressing a shutter to perform a photographing operation.

After the audio signal is collected by the activated microphone, in this embodiment of the present invention, the fluctuation value $flux\_E_i(n)$ of the signal energy of the audio signal collected by the microphone is calculated, which is specifically implemented by performing the following steps:

In a first step, the signal energy value $E_i(n)$ of the audio signal collected by the microphone is calculated, which is specifically performed by using the following formula:

$$E_i(n) = 10 * \log_{10} \sum_{k=1}^{k=K} x_k^2$$

Where, n represents a serial number of the microphone, and i represents an analysis frame number used by the system for signal analysis. A length of the analysis frame may be set according to experience, that is, the signal energy value $E_i(n)$ is obtained by performing one calculation at an interval according to the experience. Where, k represents a serial number of a signal sampling point collected in the analysis frame ($1 \le k \le K$), a value of K herein may be 320, and $x_k$, represents an amplitude value of a $k^{th}$ sampling point.

In a second step, a moving average value $mov\_E_i(n)$ of the signal energy is calculated, where $\alpha$ is an update coefficient, and $0 < \alpha < 1$; optionally, in this embodiment of the present invention, $\alpha = 0.97$:

$$\mathrm{mov\_E_i}(n) = \alpha * \mathrm{mov\_E_{i-1}}(n) + (1 - \alpha) * \mathrm{E_i}(n)$$

$E_i(n)$ may be initialized when the $mov\_E_i(n)$ is calculated for the first time, where i=1.

In a third step, a fluctuation value $flux_{E_i}(n)$ of the signal energy is calculated:

$$flux\_E_i(n) = E_i(n) - mov\_E_i(n)$$

The calculated signal energy value $flux_{E_i}(n)$ is compared with the preset threshold T2. When $flux_{E_i}(n) \geq T2$, it is determined that the microphone is in the first state; when $flux_{E_i}(n) < T2$, it is determined that the microphone is in the second state. An original signal status of the microphone obtained by the determining is recorded and stored. A subsequent step is similar to a corresponding step 103 in the foregoing implementation manner, and details are not described again.

In this embodiment of the present invention, a change of a signal energy fluctuation value of an audio signal of environmental noise picked up by a microphone is used to trigger an operation on an application, which avoids interference of the environmental noise and meanwhile also makes full use of the environmental noise to perform the operation on a terminal application, thereby reducing a trouble brought by a key pressing operation of a user and enabling more convenient and flexible operations on a terminal.

**Embodiment 2**

As shown in FIG. 4, an embodiment of the present invention provides an apparatus for performing a voice control operation on a terminal, and the apparatus includes a microphone, and:

> a starting unit 401, configured to start an application on the terminal and activate a microphone on the terminal;
> a monitoring unit 403, configured to monitor a signal status of the activated microphone; and
> an operating unit 405, configured to output, when the signal status of the microphone transits, a control instruction to change a current operation status of the application.

Specifically, in this embodiment of the present invention, a user triggers the application on the terminal by pressing a key, touching or other means, so that the started application enters a preparation phase. The application herein may be a photographing program, a recording program, or a camera program on the terminal, and may also be an alarm clock program, and may further be all other programs that may be operated by a trigger control instruction. That is, once the application is started, the application enters a preparation or ready mode, and waits for a subsequent trigger control instruction for an operation on the application, which changes the current operation status. In a specific application scenario, for example, for the above-mentioned terminal 100, the user may trigger the application on the terminal 100 by using the touchscreen 246 on the system architecture 200 of the terminal 100 or the other input/control devices 248. The application may be the camera subsystem 220 that is connected to the peripheral interface 206 on the system architecture 200 of the terminal 100, the audio subsystem 226, or the like.

To facilitate the user's operation, in this embodiment of the present invention, the monitoring unit monitors a change amplitude or other change conditions of a signal picked up by the microphone, which triggers the operating unit to output the instruction to perform the operation on the application that is started and enters the preparation phase. Specifically, the starting unit 401 activates at least one microphone on the terminal, so that the microphone enters a signal collection mode, that is, an audio signal in an environment is collected, where the audio signal in the environment may be any audio signal from the environment.

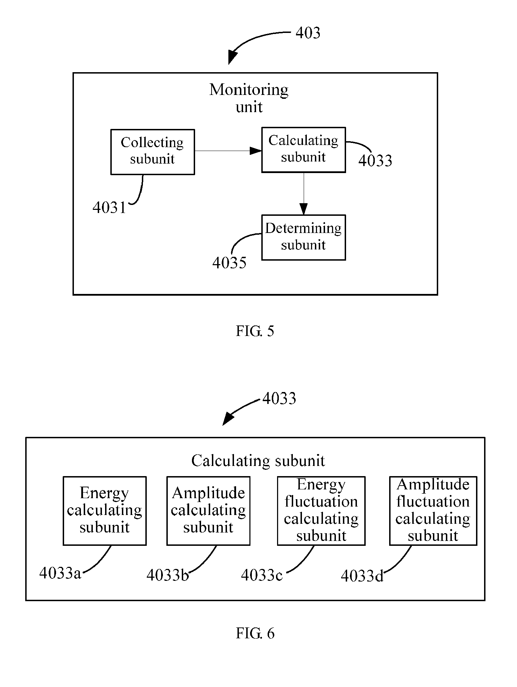

Specifically, referring to FIG. 5, the monitoring unit 403 may include:

> a collecting subunit 4031, configured to collect an audio signal by using the activated microphone;
> a calculating subunit 4033, configured to calculate a sketch value of the collected audio signal;
> a determining subunit 4035, configured to determine whether the sketch value of the audio signal is greater than or equal to a preset threshold; when a determining result is the sketch value of the audio signal is greater than or equal to the preset threshold, the signal status of the microphone is a first state; when the determining result is the sketch value of the audio signal is greater than or equal to the preset threshold, the signal status of the microphone is a second state; and
> accordingly, the operating unit 405 is configured to output, when the signal status of the microphone transits from the first state to the second state, a control instruction to change a current operation status of the application; or specifically configured to output, when the signal status of the microphone transits from the second state to the first state, the control instruction to change the current operation status of the application.

When the starting unit starts the application and enables the terminal to enter a voice control operation mode, the activating unit activates the microphone and enables the microphone to enter the signal collection mode. The microphone in this mode is used as a sound environment monitoring device to monitor an environmental sound. That is, the collecting subunit collects a sound from the environment and picks up a sound condition of a surrounding environment of the terminal. If the surrounding environment is relatively noisy, an environmental sound monitoring result at a relatively high level is output, for example, a higher voltage or current level, or a digital signal that represents a current sound environment is output. If the surrounding environment is relatively quiet, a sound monitoring result at a relatively low level is output, for example, a lower voltage or current level, or a digital signal that represents a current sound environment is output. Alternatively, in an absolutely quiet environment, no signal is output or only a digital noise signal is output to represent a current sound condition of the environment where the microphone is. Whether the microphone outputs the signal or not, or an amplitude of the signal output by the microphone, is referred to as the signal status of the microphone. In this embodiment of the present invention, the determining subunit simply classifies a complicated and changeable signal status of the microphone according to the preset threshold, that is, determining whether the sketch value of the audio signal is greater than or equal to the preset threshold, when the determining result is the sketch value of the audio signal is greater than or equal to the preset threshold, the signal status of the microphone is the first state, when the determining result is the sketch value of the audio signal is greater than or equal to the preset threshold, the signal status of the microphone is the second state, so that the determined and classified signal status may be identifiable and readable to a system. Optionally, the preset threshold acquired by the determining subunit may be adjusted according to a situation of the environmental noise; after the terminal acquires the signal status of the microphone, the monitoring unit monitors the signal status of the microphone in real time, and the operating unit is triggered to perform a corresponding operation according to a monitoring result. The complicated and changeable signal status of the microphone is simply classified according to the preset threshold. Specifically, on the one hand, such a state classification is to enable the signal status of the microphone, which is output according to noise of the complicated environment, to be identified and read by the system, and on the other hand, the state classification is to directly present a noise level of the environment where the microphone is. For example, if the signal status of the microphone is in the first state, it is assumed that a current noise level is relatively high; if the signal status of the microphone is in the second state, it is assumed that a current noise level is relatively low. Optionally, the acquired original signal status of the microphone may be directly stored in a register or a memory, or may be stored in the register or the memory after being processed in such a way as smoothing, noise reduction, and value averaging. After the signal status of the microphone is acquired, the monitoring unit monitors the signal status of the microphone in real time. Once it is found that a change of the signal status of the microphone crosses the preset threshold, that is, the signal status of the microphone transits from the first state of a higher noise level to the second state of a lower noise level; or transits from the second state of a lower noise level to the first state of a higher noise level; specifically, if the signal status of the microphone is higher than the preset threshold before transition, and the signal status of the microphone is lower than the preset threshold after the transition, or the signal status of the microphone is lower than the preset threshold before the transition, and the signal status of the microphone is higher than the preset threshold after the transition, the operating unit outputs a trigger control instruction to perform an application operation on the started application to change the current operation status once the foregoing state transition is monitored by the terminal, thereby implementing the operation on an application function of the terminal by using the microphone on the terminal. In an actual application scenario, the state transition may be implemented according to user's control over the microphone on the terminal. For example, when the original signal status of the microphone read by the terminal is the second state of a lower noise level, it may be due to that the user blocks the microphone, so that a sound pickup channel is in a closed state; or when the original signal status of the microphone read by the terminal is the first state of a higher noise level, it may be due to that the user does not block the microphone, so that the sound pickup channel is in an open state. Optionally, in the actual application scenario, the signal status transition of the microphone may be caused by multiple reasons, for example, a closed sound pickup channel is now open, so that the signal status of the microphone transits from the second state to the first state; or an open sound pickup channel is now closed, so that the signal status of the microphone transits from the first state to the second state; or the environmental noise suddenly and drastically changes, and the change may be a sudden drop or rise, so that the signal status of the microphone transits.
Specifically, referring to FIG. 6, the calculating subunit 4033 may include:

an energy calculating subunit 4033a, configured to calculate a signal energy value of the audio signal; or
an amplitude calculating subunit 4033b, configured to calculate a signal amplitude value of the audio signal; or
an energy fluctuation calculating subunit 4033c, configured to calculate a fluctuation value of signal energy of the audio signal; or

an amplitude fluctuation calculating subunit 4033d, configured to calculate a fluctuation value of signal amplitude of the audio signal.

During a specific implementation process, the calculating a sketch value of the audio signal collected by the microphone may be: calculating a signal energy value, or calculating a signal amplitude value, or calculating a fluctuation value of signal energy, or calculating a fluctuation value of signal amplitude; therefore, a corresponding calculating subunit performs a calculation on a corresponding sketch value of the audio signal.

Optionally, an activating subunit is configured to, when there are multiple microphones, activate at least two microphones of the multiple microphones on the terminal; accordingly, the monitoring unit is further configured to monitor signal statuses of the at least two activated microphones; and accordingly, the operating unit is configured to output, when at least two signal statuses in the signal statuses of the at least two activated microphones transit, the control instruction to change the current operation status of the application.

Optionally, the operating unit is further configured to output, when the at least two signal statuses in the signal statuses of at least two activated microphones transit within a preset time interval, the control instruction to change the current operation status of the application.

Optionally, the operating unit is further configured to perform timing when the signal status of the microphone transits, and output, when a preset time period t expires, the control instruction to change the current operation status of the application.

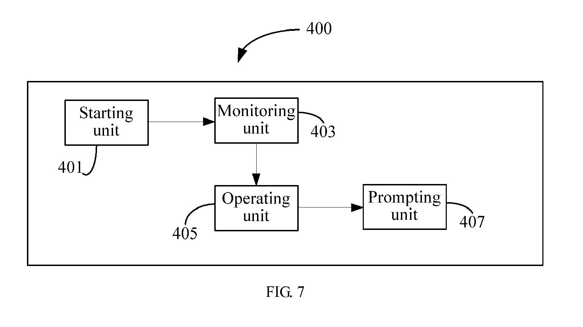

Based on the foregoing embodiment, referring to FIG. 7, the apparatus may further include: a prompting unit 407, configured to, when the signal status of the microphone transits, send prompt information to prompt that the control instruction is to be output after the time period t expires, where the prompt information is a voice prompt, a vibration prompt, a text prompt, or a light prompt.

Based on the foregoing embodiment, optionally, the activating subunit is further configured to activate, after the starting unit starts the application on the terminal, the microphone on the terminal after the preset time period.

In this embodiment of the present invention, a change of environmental noise picked up by a microphone is used to perform an operation on a terminal application, thereby avoiding interference of the environmental noise in acquiring an audio signal, and reducing a trouble brought by a key pressing operation of a user. In addition, when there are multiple microphones on a terminal, output of an instruction is determined by a signal status transition of at least two microphones, which is helpful to accurate operation and avoids a trigger operation caused by a one-hand misoperation during an operation process of the user. Furthermore, signal statuses of multiple microphones may transit at the same time and may also transit at a preset interval to trigger output of a control instruction, which helps bring convenience and diversity to a user during the operation process, and further enhances user experience.

**Claims**

1. A method for performing a voice control operation on a terminal, comprising:

   starting an application on the terminal and activating a microphone on the terminal;
   monitoring a signal status of the activated microphone; and
   outputting, when the signal status of the microphone transits, a control instruction to change a current operation status of the application.

2. The method according to claim 1, wherein the monitoring a signal status of the activated microphone specifically comprises:

   collecting an audio signal by using the activated microphone and calculating a sketch value of the audio signal; and
   determining whether the sketch value of the audio signal is greater than or equal to a preset threshold; wherein when a determining result is the sketch value of the audio signal is greater than or equal to a preset threshold, the signal status of the microphone is a first state; when the determining result is the sketch value of the audio signal is not greater than or equal to a preset threshold, the signal status of the microphone is a second state; and accordingly, the outputting, when the signal status of the microphone transits, a control instruction to change a current operation status of the application specifically comprises:

   outputting, when the signal status of the microphone transits from the first state to the second state, or transits from the second state to the first state, the control instruction to change the current operation status of the application.

3. The method according to claim 2, wherein the calculating a sketch value of the audio signal comprises: calculating a signal energy value of the audio signal, or a signal amplitude value, or a fluctuation value of signal energy, or a fluctuation value of signal amplitude.

4. The method according to any one of claims 1 to 3, wherein there are multiple microphones:

accordingly, the starting an application on the terminal and activating a microphone on the terminal specifically comprises:

starting the application on the terminal and activating at least two microphones of the multiple microphones on the terminal.

5. The method according to claim 4, wherein the monitoring a signal status of the activated microphone specifically comprises:

monitoring microphone signal statuses of the at least two activated microphones;
the outputting, when the signal status of the microphone transits, a control instruction to change a current operation status of the application specifically comprises:

outputting, when at least two signal statuses in the microphone signal statuses of the at least two activated microphones transit, the control instruction to change the current operation status of the application.

6. The method according to claim 5, wherein the outputting, when at least two signal statuses in the microphone signal statuses of the at least two activated microphones transit, the control instruction to change the current operation status of the application specifically comprises:

outputting, when the at least two signal statuses in the microphone signal statuses of the at least two activated microphones transit within a preset time interval, the control instruction to change the current operation status of the application.

7. The method according to any one of claims 1 to 6, wherein the outputting, when the signal status of the microphone transits, a control instruction to change a current operation status of the application specifically comprises:

performing timing when the signal status of the microphone transits, and outputting, when a preset time period t expires, the control instruction to change the current operation status of the application.

8. The method according to any one of claims 1 to 7, wherein the method further comprises:

when the signal status of the microphone transits, sending prompt information to prompt that the control instruction is to be output after the time period t expires, wherein the prompt information is a voice prompt, a vibration prompt, a text prompt, or a light prompt.

9. The method according to any one of claims 1 to 8, wherein the starting an application on the terminal and activating a microphone on the terminal specifically comprises: starting the application on the terminal, and activating the microphone on the terminal after a preset time period.

10. A terminal, comprising a microphone, and further comprising:

a starting unit, configured to start an application on the terminal and activate a microphone on the terminal;
a monitoring unit, configured to monitor a signal status of the activated microphone; and
an operating unit, configured to output, when the signal status of the microphone transits, a control instruction to change a current operation status of the application.

11. The terminal according to claim 10, wherein the monitoring unit comprises:

a collecting subunit, configured to collect an audio signal by using the activated microphone;
a calculating subunit, configured to calculate a sketch value of the collected audio signal; and
a determining subunit, configured to determine whether the sketch value of the audio signal is greater than or equal to a preset threshold; when a determining result is the sketch value of the audio signal is greater than or equal to a preset threshold, the signal status of the microphone is a first state; when the determining result is the sketch value of the audio signal is not greater than or equal to a preset threshold, the signal status of the microphone is a second state; and

accordingly, the operating unit is configured to output, when the signal status of the microphone transits from the first state to the second state, the control instruction to change the current operation status of the application; or

configured to output, when the signal status of the microphone transits from the second state to the first state, the control instruction to change the current operation status of the application.

12. The terminal according to claim 11, wherein the calculating subunit comprises:

an energy calculating subunit, configured to calculate a signal energy value of the audio signal; or
an amplitude calculating subunit, configured to calculate a signal amplitude value of the audio signal; or
an energy fluctuation calculating subunit, configured to calculate a fluctuation value of signal energy of the audio signal; or
an amplitude fluctuation calculating subunit, configured to calculate a fluctuation value of signal amplitude of the audio signal.

13. The terminal according to any one of claims 10 to 12, wherein there are multiple microphones:

accordingly, the starting unit comprises:

an activating subunit, configured to activate at least two microphones of the multiple microphones on the terminal.

14. The terminal according to claim 13, wherein the monitoring unit is configured to monitor microphone signal statuses of the at least two activated microphones; and

accordingly, the operating unit is specifically configured to output, when at least two signal statuses in the microphone signal statuses of the at least two activated microphones transit, the control instruction to change the current operation status of the application.

15. The terminal according to claim 14, wherein the operating unit is further configured to output, when the at least two signal statuses in the microphone signal statuses of the at least two activated microphones transit within a preset time interval, the control instruction to change the current operation status of the application.

16. The terminal according to any one of claims 10 to 15, wherein the operating unit is further configured to perform timing when the signal status of the microphone transits, and output, when a preset time period t expires, the control instruction to change the current operation status of the application.

17. The terminal according to any one of claims 10 to 16, wherein the apparatus further comprises:

a prompting unit, configured to, when the signal status of the microphone transits, send prompt information to prompt that the control instruction is to be output after the time period t expires, wherein the prompt information is a voice prompt, a vibration prompt, a text prompt, or a light prompt.

18. The terminal according to any one of claims 10 to 17, wherein the activating subunit is further configured to activate, after the application on the terminal is started, the microphone on the terminal after a preset time period.

100

102

104

120

FIG. 1

FIG. 2

300

Start an application on the terminal and
activate a microphone on the terminal

S301

Monitor a signal status of the activated
microphone

S302

Output, when the signal status of the
microphone transits, a control instruction to
change a current operation status of the
application

S303

FIG. 3

400

Starting
unit

Monitoring
unit

403

401

Operating
unit

405

FIG. 4

403

Monitoring
unit

Collecting
subunit

Calculating
subunit

4033

4031

Determining
subunit

4035

FIG. 5

4033

Calculating subunit

Energy
calculating
subunit

Amplitude
calculating
subunit

Energy
fluctuation
calculating
subunit

Amplitude
fluctuation
calculating
subunit

4033a

4033b

4033c

4033d

FIG. 6

400

| Starting unit | → | Monitoring unit 403 |

401

Monitoring unit
↓

| Operating unit | → | Prompting unit |

405                                    407

FIG. 7

Europäisches
Patentamt

European
Patent Office

Office européen
des brevets

# EUROPEAN SEARCH REPORT

Application Number

EP 14 19 7372

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/298796 A1 (KUBERKA CHERYL J [US] ET AL) 4 December 2008 (2008-12-04)<br>* figures 1-5 *<br>* paragraph [0028] - paragraph [0041] *<br>* paragraph [0051] *<br>----- | 1-18 | INV.<br>G06F3/16<br>H04N5/232<br>G10L25/78 |
| X | US 2011/161076 A1 (DAVIS BRUCE L [US] ET AL) 30 June 2011 (2011-06-30)<br><br>* figures 26,28 *<br>* paragraph [0636] - paragraph [0645] *<br>* paragraph [0743] - paragraph [0770] *<br>* page 897 *<br>----- | 1,4-6, 8-10, 13-15, 17,18 | |
| | | | TECHNICAL FIELDS SEARCHED (IPC)<br><br>G06F<br>G10L<br>H04N |

The present search report has been drawn up for all claims

| Place of search | Date of completion of the search | Examiner |
|---|---|---|
| The Hague | 29 April 2015 | Alliot, Sylvain |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 14 19 7372

This annex lists the patent family members relating to the patent documents cited in  the above-mentioned European search report.
The members are as contained in the European Patent Office EDP file on
The European Patent Office is in no way liable for these particulars which are merely given for the purpose of information.

29-04-2015

| Patent document cited in search report | | Publication date | Patent family member(s) | | Publication date |
|---|---|---|---|---|---|
| US 2008298796 | A1 | 04-12-2008 | CN | 101682694 A | 24-03-2010 |
| | | | CN | 103442171 A | 11-12-2013 |
| | | | EP | 2149255 A2 | 03-02-2010 |
| | | | JP | 2010531080 A | 16-09-2010 |
| | | | JP | 2013225860 A | 31-10-2013 |
| | | | US | 2008298796 A1 | 04-12-2008 |
| | | | WO | 2008153820 A2 | 18-12-2008 |
| US 2011161076 | A1 | 30-06-2011 | US | 2011161076 A1 | 30-06-2011 |
| | | | US | 2014323142 A1 | 30-10-2014 |
| | | | US | 2014337733 A1 | 13-11-2014 |

EPO FORM P0459

For more details about this annex : see Official Journal of the European Patent Office, No. 12/82